# EUROPÄISCHE PATENTSCHRIFT

(11) **EP 1 417 998 B1**
(45) Veröffentlichungstag und Bekanntmachung des Hinweises auf die Patenterteilung: **08.07.2009**
(21) Anmeldenummer: 02405962.8
(22) Anmeldetag: 08.11.2002
(51) Int. Cl.: B01F 7/12, B01J 19/18, B01J 19/28, B29B 7/40, B01F 15/00, B01F 7/02, B01F 15/06, B01F 15/02

(54) **Verfahren zum Mischen von festen und flüssigen Komponenten in einer Mischvorrichtung, Anwendung des Verfahrens und Mischvorrichtung**
Method for mixing of solid and liquid components in a mixing device, appliance of the method and mixing device
Procédé pour mélanger des matériaux solides et liquides dans un dispositif mélangeur, utilisation du procédé et dispositif mélangeur

(43) Veröffentlichungstag der Anmeldung: 12.05.2004
(73) Patentinhaber: Buss-SMS-Canzler GmbH, 35510 Butzbach (DE)
(72) Erfinder: Hinz, Wolfgang, 5400 Baden (CH); Behnisch, Dieter, 01471 Bärnsdorf (DE)
(74) Vertreter: Schaad, Balass, Menzl & Partner AG

(56) Entgegenhaltungen:
- EP-A- 0 669 193
- EP-A- 0 728 728
- EP-A- 0 947 540
- EP-A- 1 127 609
- PATENT ABSTRACTS OF JAPAN vol. 0173, no. 36 (M-1435), 25. Juni 1993 (1993-06-25) & JP 05 042532 A (MATSUSHITA ELECTRIC WORKS LTD), 23. Februar 1993 (1993-02-23)

## Beschreibung

Die Erfindung betrifft ein Verfahren zum Mischen von festen und flüssigen Komponenten sowie eine Mischvorrichtung zur Durchführung dieses Verfahrens.

Solche Verfahren sind aus EP-A-0 728 728, EP-A-0 947 540 und JP-A-05 042 532 bekannt.

EP-A-0 728 728 offenbart ein Verfahren zur Herstellung von Calciumsalzen schwacher Säuren in einem kontinuierlich arbeitenden Salzbildungsreaktor. Dieser weist einen horizontalen hohlzylindrischen Körper auf, in dessen Innenraum eine Rotorwelle angeordnet ist, die mit radial ausgerichteten, durch die Rotorwelle angetriebenen Rotorblättern versehen ist. Der Reaktor weist zudem an einem Ende eine Zuführöffnung und am anderen Ende einen Auslass auf.

EP-A-0 947 540 offenbart ein Verfahren zur Herstellung einer trockenen Muttercharge, umfassend den Schritt, dass Pigment und ein Dispergiermittel einem Turbomischer zugeführt werden.

JP-A-05 042 532 offenbart einen Mischzylinder, der einen Schaft umfasst, an dessen hinteren Teil ein Rotorblatt schraubenförmig angeordnet ist.

Für die Herstellung verschiedenster Produkte werden Komponenten gemischt, um so homogene Zusammensetzungen zu erhalten. Das Mischen erfolgt dabei beispielsweise durch Rühren oder Kneten.

Aufgabe der vorliegenden Erfindung war es, ein einfaches und effizientes Verfahren zur Mischung fester und flüssiger Komponenten bereitzustellen, mit welchem insbesondere beim Einmischen geringer Flüssigkeitsmengen in eine grosse Menge anderer Komponenten sehr rasch eine homogene Verteilung der Komponenten erzielt wird.

Die Aufgabe wird durch das Verfahren gemäss Anspruch 1 und die Vorrichtung gemäss Anspruch 9 gelöst. Weitere vorteilhafte Ausführungsformen sind Gegenstand der abhängigen Ansprüche 2 bis 8 und 10 bis 11.

Durch das erfindungsgemässe Verfahren werden verschiedene Komponenten so gemischt, dass eine gleichmässige Zusammensetzung erreicht wird. Durch das freie Ende der radial ausgerichteten Rotorblätter werden die zu mischenden Komponenten wiederholt auf der Innenwand des hohlzylindrischen Körpers verteilt, sodass eine dünne Schicht entsteht. Diese Schicht löst sich anschliessend wieder von der Innenwand ab und wird erneut von den nächsten Rotorblätter an die Innenwand des hohlzylindrischen Körpers in einer, dünnen Schicht aufgetragen. Bedingt durch die Rotationsbewegung der Rotorwelle wird vor den Rotorblättern eine Bugwelle, erzeugt, die in sich stark turbulent ist. Der Spalt zwischen dem freien Ende der Rotorblätter und der Innenwand des hohlzylindrischen Körpers bestimmt wesentlich die Dicke der Komponentenschicht. Falls in den zu mischenden Komponenten oder durch eine Reaktion Komponenten freigesetzt werden, die flüchtig sind, erzeugt deren Freiwerden noch weitere Bewegungen in der Komponentenschicht. Neben der Zentrifugalkraft werden die Komponenten durch den Kontakt mit den Rotorblättern im Spalt ein Anpressen der Komponenten an die Gehäusewand statt. Dadurch wird Energieaustausch intensiviert. Durch die beiden oben beschriebenen Effekte, mechanisch induzierte Turbulenzen und intensiver Energieaustausch mit der Gehäusewand haben, werden die Komponenten sehr gut gemischt.

Die Enden der Rotorblätter bilden mit der Innenwand des hohlzylindrischen Körpers einen Spalt von einigen Millimetern Breite aus, vorzugsweise von 1 bis 5 mm. Die bevorzugte Spaltenbreite ist auch abhängig von der Baugrösse der Mischvorrichtung. Die Umfangsgeschwindigkeit der Mischvorrichtung liegt im Bereich von 8 bis 15 m/s.

Durch das erfindungsgemässe Verfahren ist es möglich feste, flüssige und/oder gasförmige Komponenten miteinander unter vorbestimmten Temperatur- und Druckverhältnissen zu mischen und je nach Erfordernissen eine Temperaturerhöhung oder eine Temperaturerniedrigung herbeizuführen. Komponenten, die durch Temperaturerhöhungen flüchtig werden, können aus der Mischvorrichtung entfernt werden.

In einer Ausführungsform werden die Komponenten durch eine einzige Zuführöffnung dem Innenraum des hohlzylindrischen Körpers zugeführt. Die Anzahl der Komponenten ist nicht beschränkt, solange das Volumen der Summe aller zugeführten Komponenten kleiner ist als das maximale Fördervolumen der Mischvorrichtung. Nach dem Mischvorgang wird durch den Auslass die Mischung sämtlicher Komponenten entnommen.

In einer weiteren Ausführungsform des erfindungsgemässen Verfahrens werden die einzelnen Komponenten durch verschiedene Zuführöffnungen dem Innenraum des hohlzylindrischen Körpers zugeführt. Die verschiedenen Zuführöffnungen können radial oder in Längsrichtung angeordnet sein. Durch eine Anordnung der verschiedenen Zuführöffnungen in Längsrichtung können bestimmte Komponenten später zugegeben werden, was besonders bevorzugt ist, wenn eine vorgelegte Komponente vorbehandelt, wie zum Beispiel erwärmt oder in einem Lösungsmittel gelöst oder geschmolzen werden muss.

In einer weiteren Ausführungsform weist die Rotorwelle eintrittsseitig in einem ersten Bereich eine Schnecke auf. In diesem ersten Bereich des hohlzylindrischen Körpers, der die Schnecke umgibt, ist eine separate Heizzone angebracht, die individuell steuerbar ist. Diese separate Heizzone erlaubt ein schonenderes Erwärmen der Komponenten und kann Spritzer, die durch zu schnelles Aufwärmen entstehen können, vermeiden. Durch die Schnecke können die Komponenten in einem ersten Schritt schonend gefördert werden. Besonders geeignet ist dieses Verfahren für Thermoplaste, die in einem ersten Schritt unter Kneten erwärmt, homogenisiert und plastifiziert, bevor sie mit weiteren Komponenten gemischt werden.

In einer weiteren Ausführungsform des erfindungsgemässen Verfahrens werden flüssige oder gasförmige Komponenten nebst den oben erwähnten Möglichkeiten durch eine oder beide Rotorwellenenden zugeführt und über Düsen in den Innenraum des hohlzylindrischen Körpers gesprüht. Diese Art der Zuführung ist besonders geeignet, wenn eine kleine Menge einer Flüssigkeit zugegeben werden muss, die sich in einer sehr grossen Menge anderer Komponenten homogen verteilen muss. An der Rotorwelle befinden sich Düsen, durch diese die flüssigen Komponenten in den hohlzylindrischen Körper eingespritzt werden. Dabei ist die Anzahl der Düsen pro zugeführte Komponente variabel. Radial kann zwischen jeder Rotorblattreihe eine Düse vorgesehen werden. In Längsrichtung des Rotors kann an jeder beliebigen Stelle ein Düsenkopf montiert werden.

In einer weiteren Ausführungsform werden Feststoffe mit sehr geringer Schüttdichte über die Stirnflächen des hohlzylindrischen Körpers in den Innenraum gegeben. Diese Art der Zuführung erlaubt die Ausbildung einer zirkulierenden Wirbelschicht der Komponente, bevor weitere Komponenten dazu gemischt werden.

In einer bevorzugten Ausführungsform ist der hohlzylindrische Körper beheizbar oder kühlbar. Die Mischvorrichtung stellt einen sehr guten Wärmetauscher für feste Komponenten wie Granulate, Pulver, Pastillen dar. Diese festen Komponenten können aufgeheizt und anschliessend geschmolzen werden. Mit der Schmelze können weitere feste pulverförmige und/oder flüssige Komponenten wie Wasser, Lösungsmittel, Öle hinzugemischt werden.

Mit dem erfindungsgemässen Verfahren können auch chemische Reaktionen durchgeführt werden, indem während des Mischens der Komponenten diese miteinander reagieren. Durch die intensive Durchmischung der Reaktionspartner ist die Verweilzeit in der Mischvorrichtung kurz, was wirtschaftlich sehr positiv ist. Aufgrund der verschiedenen Temperaturzonen ist eine kontrollierte Fahrweise der Reaktionen sichergestellt. Das Gemisch, das das Reaktionsprodukt enthält kann im Innenraum des hohlzylindrischen Körpers gewaschen, getrocknet und/oder gekühlt werden.

Je nach der Beschaffenheit des Reaktionsproduktes oder der Mischung nach dem erfindungsgemässen Verfahren kann das Reaktionsprodukt oder die Mischung mittels einer vertikalen, zweiwelligen Austragsschnecke aus der Mischvorrichtung ausgetragen werden. Dies trifft bei Reaktionsprodukten oder Mischungen zu, deren Viskosität einen Austrag durch einen Flansch verunmöglicht. Dabei kann eine vorhandene Gasphase durch die Austragsschnecke geführt und durch geeignete Apparate abgesaugt werden.

Alternativ ist auch eine Austragung mit einer horizontalen Doppelschnecke für viskose Reaktionsprodukte und Mischungen möglich. Eine Entgasung erfolgt hier über einen separaten Flansch.

Die Erfindung wird anhand schematischer Zeichnungen an mehreren Ausführungsbeispielen erläutert.

Es zeigen
- Fig. 1a: einen Längsschnitt durch die Mischvorrichtung, bei der die Beschickung mit den verschiedenen Komponenten durch die gleiche Zuführöffnung erfolgt;
- Fig. 1b: einen Querschnitt gem. der Linie II-II in Fig. 1a;
- Fig. 2a: einen Längsschnitt durch die Mischvorrichtung, bei der die Beschickung mit den verschiedenen Komponenten durch mehrere Zuführöffnungen erfolgt;
- Fig. 2b: einen Querschnitt gem. der Linie II-II in Fig. 2a;
- Fig. 2c: einen Längsschnitt durch die Mischvorrichtung, bei der ein Teil der Beschickung durch eine stirnseitige Zuführöffnung erfolgt;
- Fig. 3a: einen Längsschnitt durch die Mischvorrichtung, bei der die Beschickung mit einer flüssigen Komponente durch die Rotorwelle erfolgt;
- Fig. 3b: einen Querschnitt gem. der Linie II-II in Fig. 3a;
- Fig. 4: einen Längsschnitt durch die Mischvorrichtung wie in Fig. 1a dargestellt, die im öffnungsseitig eine Schnecke aufweist;
- Fig. 5: einen Längsschnitt durch die Mischvorrichtung wie in Fig. 2a dargestellt, die im öffnungsseitig eine Schnecke aufweist;
- Fig. 6: einen Längsschnitt durch die Mischvorrichtung wie in Fig. 3a dargestellt, die im öffnungsseitig eine Schnecke aufweist;
- Fig. 7: eine Detailaufnahme des Querschnittes gem. der Linie II-II in Fig. 6a;
- Fig. 8a bis 8d: verschiedene Austragungsvorrichtungen.

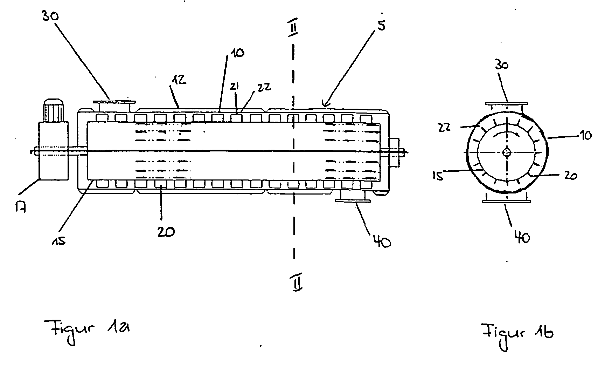

Die in Fig. 1a in einem Längsschnitt dargestellte Mischvorrichtung 5 weist einen horizontalen hohlzylindrischen Körper 10 auf. Die Aussenwand des hohlzylindrische Körper 10 ist von Heiz- und Kühlzonen 12 umgeben, die eine individuelle Temperatursteuerung der Mischvorrichtung ermöglichen. Natürlich wäre es auch möglich, dass die Mischvorrichtung 5 nur eine einzige Heiz- und/oder Kühlzone 12 aufweist. Im Innenraum des hohlzylindrischen Körpers 10 ist eine Rotorwelle 15 angebracht, die von Aussen durch eine Antriebsvorrichtung 17 angetrieben wird. Die Rotorwelle 15 ist mit radial ausgerichteten Rotorblättern 20 versehen. Die freien Enden 21 der Rotorblätter 20 enden in geringem Abstand zu der Innenwand des hohlzylindrischen Körpers, beispielsweise in einem Abstand von 6 mm, sodass ein Spalt 22 ausgebildet wird. Das Mischprodukt bzw. die zu mischenden Komponenten werden in einer dünnen Schicht auf die Innenwand aufgetragen und hierbei in Richtung Auslass 40 der Mischvorrichtung 5 gefördert. Die Rotorblätter 20 weisen je nach Anwendung verschiedene Formen auf, die jeweils für spezifische Aufgaben optimiert sind. Beispielsweise können die Rotorblätter 20 im Beschickungsbereich Rotorblattabschnitte aufweisen, die in Förderrichtung angewinkelt an der Rotorwelle 15 angebracht sind und damit als Förderblätter wirken. Die Rotorblätter 20 können je nach Anwendung so an der Rotorwelle angebracht sein, dass sie fest oder beweglich sind. Bei der hier gezeigten Ausführungsform weist die Mischvorrichtung 5 eine einzige Zuführöffnung 30 für die Beschickung der Mischvorrichtung auf. Dabei können eine oder mehrere feste Komponenten und/oder weitere flüssige Komponenten miteinander gemischt werden.

Fig. 1b zeigt einen Querschnitt durch die in Figur 1a gezeigte Mischvorrichtung 5. Diese weist eine Zuführöffnung 30 für die Beschickung des hohlzylindrischen Körpers 10 auf. Die Rotorwelle 15 ist schematisch in der Mitte des hohlzylindrischen Körpers 10 angeordnet.

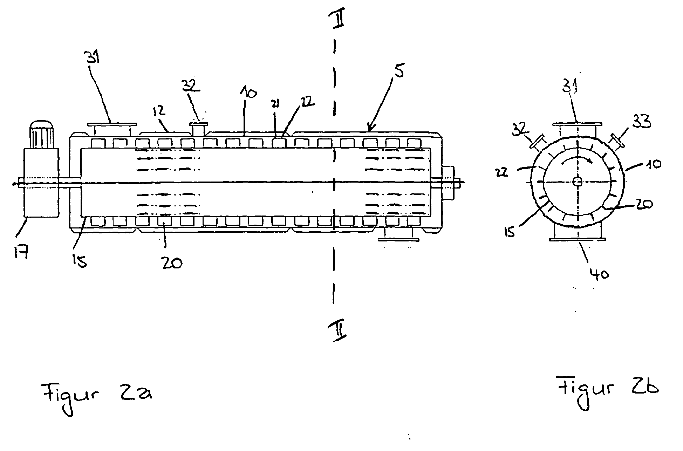

Fig. 2a zeigt eine zur der in Fig. 1a dargestellten ähnliche Mischvorrichtung 5 mit dem Unterschied, dass die Mischvorrichtung mehrere Zuführöffnungen 31,32,33 zum Beschicken des hohlzylindrischen Körpers aufweist. Die Zuführöffnungen 32 und 33 können den gleichen Abstand oder verschiedene Abstände zu der Zuführöffnung 31 haben. Durch eine versetzte Anordnung der Zuführöffnungen 31,32,33 in Längsrichtung können einzelne Komponenten später zu dem Gemisch gegeben werden, was insbesondere dann sinnvoll ist, wenn eine Komponente durch Kühlen oder Erwärmen vorbereitet werden muss oder wenn eine Reaktionskomponente später zugegeben werden soll.

Fig. 2b zeigt einen Querschnitt durch die in Figur 2a gezeigte Mischvorrichtung. Zur Beschickung weist die Mischvorrichtung verschiedene Zuführöffnungen 31,32,33 auf. Die Rotorwelle 15 ist schematisch in der Mitte des hohlzylindrischen Körpers 10 angeordnet.

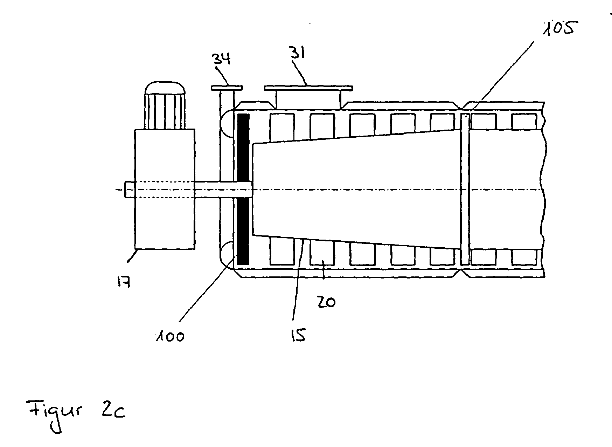

Fig. 2c zeigt eine weitere Variante, bei der Zuführöffnungen 34 an der Stirnseite der Mischvorrichtung angebracht sind. An der Rotorwelle ist dabei vorzugsweise ein dynamischer Abstreifer 100 befestigt, der die Zuführöffnung für den Füllstoff freihält. Die Einmischzone wird im Gasraum der Mischvorrichtung begrenzt durch einen am hohlzylindrischen Körper angebrachten, rotierenden vertikalen Stauring 105. Durch den damit erzeugten Widerstand verbleiben die Füllstoffe mit dem niedrigen Schüttgewicht bis zur vollständigen Vermischung in der Einmischzone. In diesem Bereich, d.h. bis zum abschliessenden Stauring 105 am Ende der Einmischzone, kann das freie Volumen vergrössert werden. Dies wird erreicht durch eine Verkleinerung des Durchmessers des Rotorwelle 15 oder vorteilhafter durch eine konische Ausführung des Rotorwelle 15, um auch der steigenden Festigkeitsanforderung Rechnung zu tragen, da dadurch die Rotorblätter 20 der Mischvorrichtung auch kürzer und steifer werden.

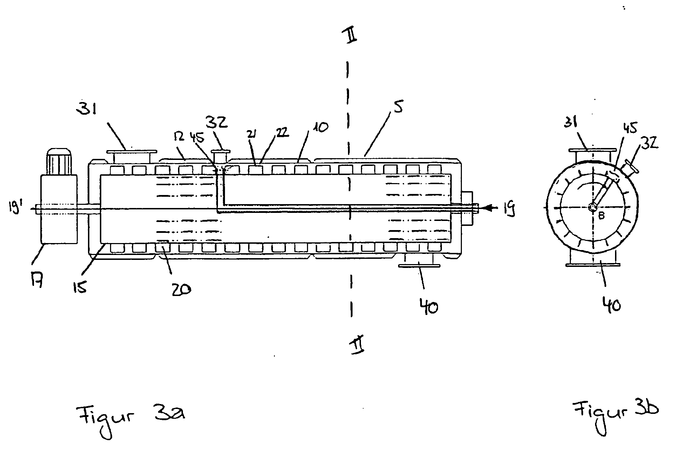

Fig. 3a zeigt eine zur den in Fig. 1a und 2a dargestellten ähnliche Mischvorrichtung 5 mit dem Unterschied, dass eine weitere flüssige oder gasförmige Komponente durch ein Ende 19 der Rotorwelle 15 zugeführt und an der gewünschten Stelle mittels einer oder mehreren Düsen 45 in den Innenraum des hohlzylindrischen Körpers 10 gespritzt werden. Aufgrund der zwei Enden 19,19' der Rotorwelle 15 ist es möglich zwei Komponenten zum Aufsprühen über die Rotorwelle 15 einzuführen. Durch das Aufsprühen alleine wird schon eine feine Verteilung so eingespritzten Komponente erreicht, die durch die Mischvorrichtung 5 noch verfeinert wird. Durch diese Ausführungsform kann eine ausgezeichnete Homogenität erzielt werden. In der hier dargestellten Ausführungsform weist die Mischvorrichtung auf der Mantelfläche eine einzige Zuführöffnung 31 auf. Es ist jedoch auch eine Ausführungsform denkbar, bei der auf der Mantelfläche mehrere separate Zuführöffnungen angebracht sind, wie dies in der in Fig. 2a dargestellten Ausführungsform der Fall ist.

Fig. 3b zeigt einen Querschnitt durch die in Figur 3a gezeigte Mischvorrichtung. Radial ist zwischen zwei Rotorblättern eine Düse 45 angebracht. Es können jedoch je nach Verwendungszweck zwischen sämtlichen Rotorblättern eine Düse angebracht werden.

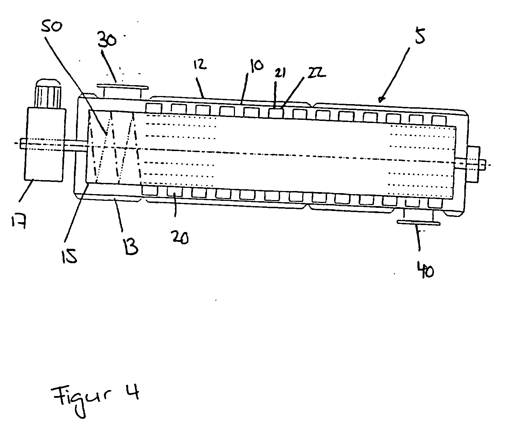

Fig. 4 zeigt eine zur der in Fig. 1a dargestellten ähnliche Mischvorrichtung 5 mit dem Unterschied, dass die Rotorwelle 15 des hohlzylindrischen Körpers 10 eintrittsseitig mit einer Schnecke 50 versehen ist und die eintrittsseitige Mantelfläche 13 des hohlzylindrischen Körpers eine eigene Heizzone aufweist. Bei gewissen Komponenten hat sich die durch die Schnecke hervorgerufene, etwas sanftere Beschleunigung als Vorteil herausgestellt. Die separate Heizzone erlaubt eine schonende Aufheizung von schmelzbaren Komponenten und hilft Spritzer durch zu schnelles Schmelzen zu vermeiden. Damit wird der Mischvorgang besser kontrollierbar.

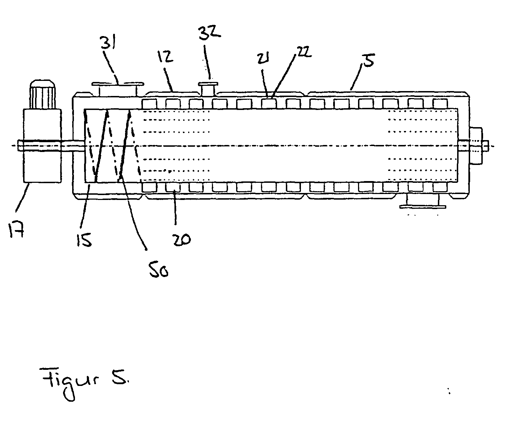

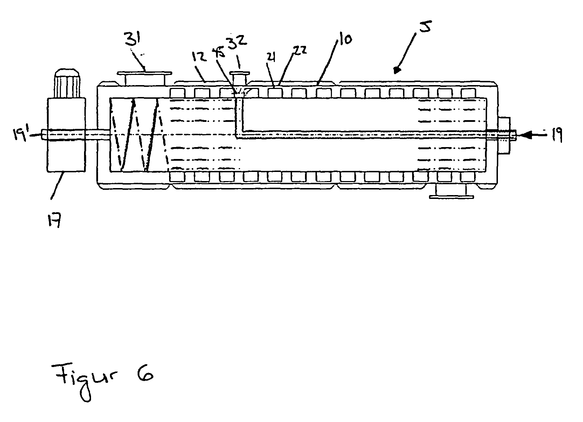

Figuren 5 und 6 zeigen die in Figuren 2a und 3a dargestellten Mischvorrichtungen, die im Beschickungsbereich ebenfalls eine Schnecke 50 aufweisen.

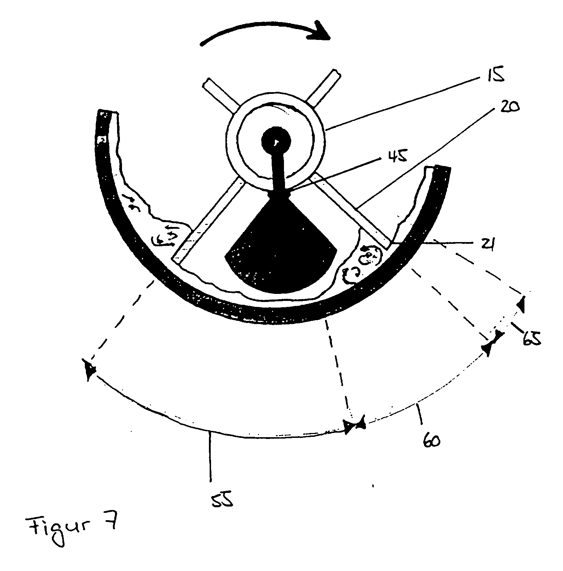

Figur 7 zeigt eine Detailaufnahme der Düsen 45. Die Düsen 45 bewegen sich mit der Rotorwelle 15 mit. Die in den Innenraum eingespritzte Komponente wird auf die anderen Komponenten aufgebracht, die sich in einer beruhigten Filmzonen 55 befinden, und durch die vom benachbarten Rotorblatt 20 erzeugte Bugwelle 60 weiter verteilt. Im Spalt, zwischen Stirnfläche 21 der Rotorblätter 20 befindet sich eine Turbulenzzone 65.

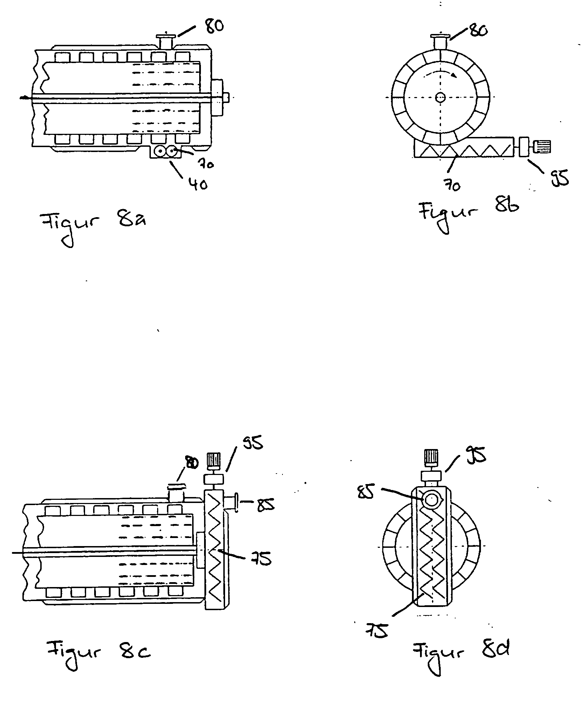

Figur 8a zeigt einen möglichen Auslass 40 des einer in den Figuren 1 bis 6 gezeigten Mischvorrichtung. An dem Auslass 40 ist eine horizontalen Doppelschnecke 70 angebracht. Das Reaktionsprodukt oder die Mischungen werden bei der Austrittsöffnung 95 entnommen. Durch diese horizontale Doppelschnecke 70 ist eine Austragung von viskosen Reaktionsprodukten und Mischungen möglich. Ein separater Flansch 80 ermöglichet die Entgasung der Reaktionsprodukte oder der Mischungen.

Figur 8b zeigt einen Querschnitt durch den in Figur 8a gezeigten Auslass.

Figur 8c zeigt einen weiteren möglichen Auslass 40 des einer in den Figuren 1 bis 6 gezeigten Mischvorrichtung. An dem Auslass 40 ist eine vertikale Doppelschnecke 75 angebracht. Das Reaktionsprodukt oder die Mischungen werden bei der Austrittsöffnung 95 entnommen. Durch diese vertikale Doppelschnecke 75 ist eine Austragung von viskosen Reaktionsprodukten und Mischungen möglich. Eine vorhandene Gasphase kann durch die vertikale Doppelschnecke geführt werden und durch geeignete Apparate an der Öffnungen 85 abgesaugt werden.

Figur 8d zeigt einen Querschnitt durch den in Figur 8c gezeigten Auslass.

### Beispiele

In den nachfolgenden Beispielen werden
- A₁-Aₛ: für feste Komponenten 1 bis s; die geschmolzen werden;
- B₁-Bₘ: für flüssige Komponenten 1 bis m;
- C₁-Cₙ: für feste Komponente 1 bis n;
- D₁-Dₚ: für gasförmige Komponente 1 bis p;
- R₁-R_{q}: für die Reaktionsprodukte 1 bis q verwendet.

### Beispiel 1: Komponentenzuführung durch eine einzige Zuführöffnung

Die Komponenten A₁-Aₛ, B₁-Bₘ und C₁-Cₙ werden über eine einzige Zuführöffnung in eine Mischvorrichtung, wie in Figur 1a dargestellt, gegeben. Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden. Das Produkt des erfindungsgemässen Verfahrens ist eine Mischung der Komponenten A₁-Aₛ, B₁-Bₘ und C₁-Cₙ.

Beispielsweise werden die folgende Komponenten

| | | |
|---|---|---|
| A | Harnstoff-Pulver | 70 - 80 % |
| B | Silikonöl | 12 - 18 % |
| C | Stärkepulver | 3 -8 % |

bei ungefähr atmosphärischem Druck, d.h. bei ca. 980 mbar und einer Temperatur von 145° C in Heizzone 1 und 135 bis 140°C in Heizzone 2 gemischt.

Alternativ kann der Harnstoff auch flüssig zugegeben werden (130°C-136°C). In diesem Fall ist nur eine einzige Heizzone notwendig. Die Mischung der drei Komponenten, nämlich des flüssigen Harnstoffs, des Silikonöls und des Stärkepulvers erfolgt bei 135°C bis 140°C bei einem Druck von ca. 980 mbar.

Alternativ kann die Mischvorrichtung öffnungsseitig eine Schnecke mit einer weiteren Heizzone aufweisen (Figur 4). In diesem Fall kann anstelle des Harnstoffpulvers Harnstoffpellets verwendet werden. Diese werden in der ersten Heizzone bei ca. 50°C geschmolzen und anschliessend wie oben beschrieben mit den weiteren Komponenten in zwei weiteren Heizzonen bei 145°C und bei 135°C bis 140°C gemischt.

### Beispiel 2: Zuführung der einzelnen Komponenten über separate Zuführöffnungen

Die Komponenten A₁-Aₛ, B₁-Bₘ und C₁-Cₙ werden jeweils durch separate Zuführöffnungen in eine Mischvorrichtung, wie in Figur 2a gezeigt, gegeben. Die separaten Zuführöffnungen können radial oder in Längsrichtung angeordnet sein. Ebenso werden die Komponenten C₁-Cₙ über jeweils separate Zuführöffnungen zugeführt.

Die Anzahl der Komponenten ist nicht beschränkt, solange die Summe aller Volumen der zugeführten Komponenten kleiner ist als das maximale Fördervolumen der Mischvorrichtung.

Silikonpolymere: Insbesondere Polysiloxane aber auch andere Silikonpolymere und -öle mit einer Viskosität von 0, 2 - 10'000 Pas (bei 20 ° C)

Technisch bedeutende Füllstoffe sind HDK, hochdisperse Kieselsäuren, unbehandelte Kieselsäuren und Kreide, Quarzmehl, etc. Denkbar sind auch andere Füllstoffe mit niedrigen Schüttgewichten von 15 - 100 g/l. Anteil Feststoff an Mischung: 3 - 30%.

Mit dem Compoundieren werden auf wirtschaftliche Art die ansonsten wenig beeindruckenden mechanischen Werte unverstärkter Silikonpolymere wesentlich erhöht. Die Füllstoffauswahl richtet sich in erster Linie nach dem Verwendungszweck und den verarbeitungstechnischen Erfordernissen.

Kieselsäure, resp. die in erster Linie verwendeten hochdispersen Kieselsäuren, gelten als verstärkende Füllstoffe. Als Folge treten Viskositätserhöhungen und Änderungen der Glastemperatur sowie des Kristallisationsverhaltens auf.

Nichtverstärkende Füllstoffe sind z.B. Kreide, Quarzmehl, Diatomeenerde, Glimmer, Kaolin, Al(OH)₃ und Fe₂XO₃. Die wesentlichen Wirkungen sind im unvulkanisierten Zustand ein Anheben der Viskosität der Verbindung, im vulkanisierten Zustand eine Erhöhung der Shore-Härte und des E-Moduls.

Das Silikonpolymer A wird kontinuierlich als förderbare Schmelze in die Mischvorrichtung eingespeist. Unmittelbar nachdem sich ein dünner Produktfilm, über den Umfang verteilt, aufgebaut hat, wird HDK, hochdisperse Kieselsäure B mittels einer gravimetischen Feststoffdosierung dazu gegeben. Die Zugabestutzen sind tangential an die Mischvorrichtung angebracht. Durch die Drehrichtung des Rotors und die damit erzeugte Bewegung des Produktes wird die Aufnahme der HDK in das Produkt erleichtert.

Die Silikonschmelze A wird am Eintritt von einer Einzugsschnecke erfasst, verteilt und gefördert. Im Bereich der Zugabe des Füllstoffes ist der Rotor mit den bekannten, typischen Blättern der Mischvorrichtung ausgeführt.

Durch die Aufnahme des Silikonpolymers an der grossen Oberfläche der HDK können Krümel unterschiedlicher Grösse entstehen bis hin zu Pulver.

Durch eine Zone mit erhöhter Scherung, des im folgenden Plastifizierzone genannten Teils der Mischvorrichtung wird eine homogene Schmelze erzielt. Eine lokal höhere Scherung wird erreicht durch das Anbringen von Leisten in Längsrichtung und über den Umfang der Mischvorrichtung verteilt. Der damit erreichte kleinere Spalt führt zu höherem Energieeintrag und damit zum Plastifizieren. Zusätzlich fördern die Leisten den axialen Transport des Produktes zum Austrag hin. Eine erhöhte Heiztemperatur in dieser Zone kann zum Teil ein Anschmelzen der Krümel unterstützen.

Das plastifizierte, kompoundierte Produkt wird am Ende der Mischvorrichtung durch eine vertikale, mittig angebrachte Einwellen- oder Zweiwellenschnecke ausgetragen (Figuren 8c und 8d). Die Schnecke ist nach oben offen und gestattet eine Entlüftung des Prozessraumes, ohne dass durch die Abscheidewirkung der Schnecke Produktteilchen mitgerissen werden. Die Aufnahme des Produktes erflogt durch zwei übereinander angeordnete Fenster und wird durch die Schnecke nach unten gefördert, während die mit dem Füllstoff eingetragene Luft durch die teilgefüllte Schnecke nach oben entweichen kann. Zusätzlich ist anfangs der Einmischzone nochmals eine Entlüftung angebracht (stirnseitig).

Die durch das Einmischen erzeugte Wärme wird über den mit Wasser gekühlten Doppelmantel des zylindrischen Körpers abgeführt. Um eine Schädigung des Produktes zu vermeiden, ist eine gute Kontrolle der Produktetemperatur wichtig. Die Mischvorrichtung verfügt über 4 getrennte Heizzonen, welche in etwa jeweils mit der Einmischzone, der Krümelzone, der Plastifizierzone und der Austragszone übereinstimmen.

Typische Anwendungen für diese Prozesse liegen im Bereich von 1,000 - 2,000 kg/h Durchsatzbereich der fertigen Mischung. Der Anteil des Füllstoffes ist dabei bevorzugt 5 - 15%. Die Temperierung der Heizzonen der Mischvorrichtung liegen im Bereich von 12° C - 100° C, je nach Zone, um am Austritt eine Produkttemperatur von vorzugsweise ≤ 60° C zu erreichen. Die entsprechende Grösse der Mischvorrichtung liegt im Durchmesserbereich von 0.5 m bis 0.6 m bei einem L/D-Verhältnis von 7 - 8.5. Die Umfangsgeschwindigkeit des Rotors beträgt 6 m/s - 12 m/s. Typische Produktions-Viskositäten der eingesetzten Polymere sind 5 - 120 Pas (bei 20° C).

Es sind alle möglichen Varianten miteinander kombinierbar, d.h. alle mit der Basisvariante und untereinander kombinierbar.

Dosierung mit gravimetrischen Dosiergeräten, Zugabe in der Mischvorrichtung in das freie Ringvolumen, gebildet aus Körper und Kernrohr, wobei die Zugabe stirnseitig erfolgt und vor der Zugabe des Silikonpolymers. Die Zugabe kann entsprechend durch einen Ringkanal erfolgen oder durch einzelne Stutzen.

Aus den Figuren ist ersichtlich, dass anstelle der Einzugsschnecke im Bereich der Silikonpolymeraufgabe A auch ein Rotor mit nur den bekannten, typischen Blättern verwendet werden kann.

Über die Länge der Mischvorrichtung können weitere Stoffe zugemischt werden, um spezielle Produktmischungen herstellen zu können und Eigenschaften zu modifizieren.

Der Produktaustrag erfolgt entweder mit einer Einwellenschnecke oder mit einer Doppelschecke. Doppelschnecken haben ein besseres Produkteinzugsverhalten und auch eine bessere Abscheidewirkung von Polymerteilchen, welche teilweise bei Entgasungs- und Entlüftungsvorgängen mitgerissen werden können.

Anstelle von Austragschnecken können auch Zahnradpumpen mit vorzugsweise niedrigem NPSH eingesetzt werden. Für diesen Fall kann die Entlüftung beiderseits stirnseitig erfolgen.

Mit der oben beschriebenen Mischvorrichtung kann beispielsweise auch die folgende Kombination bei ungefähr atmosphärischem Druck, d.h. bei ca. 980 mbar und einer Temperatur von 145° C in Heizzone 1 und 135 bis 140°C in Heizzone 2 gemischt werden:

| | | |
|---|---|---|
| A | Harnstoff | 30 - 35 % |
| B | Nährstoffe suspendiert in Wasser | 1 -10% |
| C | Phosphate | 55 - 65 %. |

### Beispiel 3: Zuführungen der einzelnen Komponenten über separate Zuführöffnungen und über die Rotorwelle

Die flüssigen Komponenten werden über separate Zuführöffnungen und über die Rotorwelle zugeführt. Die über die Rotorwelle zugeführten Komponenten werden über eine oder mehrere Düsen in den hohlzylindrischen Körper eingespritzt. Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden. Das Produkt des erfindungsgemässen Verfahrens ist eine Mischung der Komponenten A₁-Aₛ, B₁-Bₘ und C₁-Cₙ.

### Beispiel 4: Zuführung der zu mischenden Komponenten über eine einzige Zuführöffnungen und über die Rotorwelle

In diesem Fall werden einige flüssige Komponenten und die festen Komponenten über eine einzige Zuführöffnung in die Mischvorrichtung gegeben. Eine oder zwei flüssige Komponenten werden über die Rotorwelle der Mischvorrichtung zugeführt. Die über die Rotorwelle zugeführten Komponenten werden über eine oder mehrere Düsen in den hohlzylindrischen Körper gespritzt.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden. Das Produkt des erfindungsgemässen Verfahrens ist eine Mischung der Komponenten A₁-Aₛ, B₁-Bₘ und C₁-Cₙ.

Dabei können beispielsweise folgende Komponenten verwendet werden:

| | | |
|---|---|---|
| A | Harnstoff | 30 - 38 % |
| B | Nährstoffe suspendiert | 1 - 5 % |
| C | Phosphate | 60 - 68 % |

bei ungefähr atmosphärischem Druck, d.h bei ca. 980 mbar und einer Temperatur von 145° C in Heizzone 1 und 135 bis 140°C in Heizzone 2 gemischt.

### Beispiel 5: Stirnseitige Zuführung von festen Komponenten

Bei der Zuführung von festen Komponenten sehr geringer Schüttdichte ist eine Zuführung über die Stirnseite des hohlzylindrischen Körpers vorteilhaft. Diese Art der Zuführung erlaubt die Ausbildung einer zirkulierenden Wirbelschicht aus dieser Komponente, bevor die flüssige Komponente dazu gemischt wird. Es ist natürlich auch eine Mehrfachdosierung von der Stirnseite her möglich.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden. Das Produkt des erfindungsgemässen Verfahrens ist eine Mischung der Komponenten A₁-Aₛ, B₁-Bₘ und C₁-Cₙ.

### Beispiel 6: Reaktion von Komponenten bei Zuführung durch einzige Zuführöffnung

Die Komponenten A₁-Aₛ, B₁-Bₙ, C₁ bis Cₘ und D₁ werden über eine einzige Zuführöffnung der Mischvorrichtung zugeführt. Die Komponente D₁ steht stellvertretend für eine gasförmige Komponente, es wäre jedoch auch möglich verschiedene gasförmige Komponenten zu verwenden.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden.

Die Reaktionsbedingungen in der Mischvorrichtung können durch die Parameter Druck und Temperatur beeinflusst werden. Dadurch ist auch eine Kombination verschiedener Verfahrensschritte möglich, wie zum Beispiel Mischen, Reagieren, Trocknen oder Mischen, Reagieren, Schmelzen oder Mischen, Reagieren, Kühlen.

Bei der Herstellung von Na-Resorcinat, das ein Zwischenprodukt bei der Herstellung von Resorcin (m-Dihydroxybenzol) ist, kann beispielsweise das erfindungsgemässe Verfahren eingesetzt werden (Beckreaktion).

Dabei werden folgende Komponenten

| | | |
|---|---|---|
| A = | NaOH hochkonzentriert, gemahlen | 42 % |
| C = | Na-Benzol-m-disulfonat | 58 % |

bei einer Temperatur von 320 -350° C und ungefähr atmosphärischem Druck umgesetzt.

Der bei der Reaktion entstehende Wasserdampf wird über die Bürden entfernt.

### Beispiel 7: Reaktion von Komponenten bei Zuführung durch verschiedene Zuführöffnungen

Die Komponenten A₁-Aₛ, B₁-Bₘ, C₁-Cₙ und D₁ werden jeweils über verschiedene Zuführöffnung der Mischvorrichtung zugeführt. Die Komponente D₁ steht stellvertretend für eine gasförmige Komponente, es wäre jedoch auch möglich verschiedene gasförmige Komponenten zu verwenden.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden.

Die Reaktionsbedingungen in der Mischvorrichtung können durch die Parameter Druck und Temperatur beeinflusst werden. Dadurch ist auch eine Kombination verschiedener Verfahrensschritte möglich, wie zum Beispiel Mischen, Reagieren, Trocknen oder Mischen, Reagieren, Schmelzen oder Mischen, Reagieren, Kühlen.

### Beispiel 8: Reaktion von Komponenten bei Zuführungen über separate Zuführöffnungen und über die Rotorwelle

Die Komponenten A₁-Aₛ, B₁-Bₘ, C₁-Cₙ und D₂ werden jeweils über verschiedene Zuführöffnung der Mischvorrichtung zugeführt. Die Komponente D₂ steht stellvertretend für eine gasförmige Komponente, es wäre jedoch auch möglich verschiedene gasförmige Komponenten zu verwenden. Die Komponente Bₙ und die Komponente D₁ werden über die Rotorwelle in die Mischvorrichtung eingeführt.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden.

Die Reaktionsbedingungen in der Mischvorrichtung können durch die Parameter Druck und Temperatur beeinflusst werden. Dadurch ist auch eine Kombination verschiedener Verfahrensschritte möglich, wie zum Beispiel Mischen, Reagieren, Trocknen oder Mischen, Reagieren, Schmelzen oder Mischen, Reagieren, Kühlen.

Bei der Herstellung von Na-Resorcinat, das ein Zwischenprodukt bei der Herstellung von Resorcin (m-Dihydroxybenzol) ist, kann beispielsweise das erfindungsgemässe Verfahren eingesetzt werden (Beckreaktion). Dabei werden folgende Komponenten

| | | |
|---|---|---|
| B = NaOH | 50 % | 42 % bezogen auf NaOH-Anteil |
| C = | Na-Benzol-m-disulfonat | 58 % |

bei einer Temperatur von 320 -350° C und ungefähr atmosphärischem Druck umgesetzt.

Der bei der Reaktion entstehende Wasserdampf und der Wasserdampf der NaOH-Lösung werden über die Bürden entfernt.

### Beispiel 9: Reaktion von Komponenten bei Zuführung über eine Zuführöffnungen und über die Rotorwelle

Die Komponenten A₁-Aₛ, B₁-Bₘ, C₁-Cₙ und D₂ werden über eine einzige Zuführöffnung der Mischvorrichtung zugeführt. Die Komponente D₂ steht stellvertretend für eine gasförmige Komponente, es wäre jedoch auch möglich verschiedene gasförmige Komponenten zu verwenden. Die Komponente Bn und die Komponente D1 werden über die Rotorwelle in die Mischvorrichtung eingeführt.

Die Anzahl der Komponenten ist nicht beschränkt, solange die Summe aller Volumen der zugeführten Komponenten kleiner ist als das maximale Fördervolumen der Mischvorrichtung.

Die Mischvorrichtung kann im Mantel verschiedene Heiz- und Kühlzonen aufweisen, die bei Bedarf unabhängig voneinander geregelt werden.

Die Reaktionsbedingungen in der Mischvorrichtung können durch die Parameter Druck und Temperatur beeinflusst werden. Dadurch ist auch eine Kombination verschiedener Verfahrensschritte möglich, wie zum Beispiel Mischen, Reagieren, Trocknen oder Mischen, Reagieren, Schmelzen oder Mischen, Reagieren, Kühlen.

## Patentansprüche

1. Verfahren zum Mischen von festen und flüssigen Komponenten in einer Mischvorrichtung (5) mit einem horizontalen hohlzylindrischen Körper (10), in dessen Innenraum eine Rotorwelle (15) angeordnet ist, deren radial ausgerichteten durch die Rotorwelle (15) angetriebenen Rotorblätter (20) die zu mischenden Komponenten wiederholt auf der Innenwand des hohlzylindrischen Körpers (10) in einer dünnen Schicht verteilen, wobei die Komponenten durch Zusammenwirken der Rotorblätter (20) mit der Innenwand des hohlzylindrischen Körpers vermischt werden, und eine flüssige Komponente durch die Rotorwelle (15) zugeführt und in den Innenraum des hohlzylindrischen Körpers (10) gesprüht wird.

2. Verfahren Anspruch 1, **dadurch gekennzeichnet, dass** die Mischvorrichtung (5) auf des Mantelfläche eine einzige Zuführöffnung (31) aufweist.

3. Verfahren nach Anspruch 1, **dadurch gekennzeichnet, dass** die Mischvorrichtung (5) auf der Mantelfläche mehere separate Zuführöffnungen (31, 32, 33) aufweist.

4. Verfahren nach einem der Ansprüche 1 oder 2, **dadurch gekennzeichnet, dass** eine oder mehrere feste Komponenten im hohlzylindrischen Körper (10) geschmolzen werden.

5. Verfahren nach einem der vorangehenden Ansprüche, **dadurch gekennzeichnet, dass** eine feste. Komponente ein Thermoplast ist, der nach der Zuführung in einen ersten Bereich des hohlzylindrischen Körpers (10), der eine erste Heizzone (12) aufweist, unter Kneten erwärmt, homogenisiert, plastifiziert und anschliessend einem zweiten Bereich zugeführt wird.

6. Verfahren nach einem der vorangehenden Ansprüche, **dadurch gekennzeichnet, dass** während des Mischens der Komponenten diese miteinander reagieren.

7. Verfahren nach Anspruch 6, **dadurch gekennzeichnet, dass** das Gemisch, enthaltend das Reaktionsprodukt, im Innenraum des hohlzylindrischen Körpers gewaschen, getrocknet und/oder gekühlt wird.

8. Anwendung des Verfahrens nach einem der vorangehenden Ansprüche in der Nahrungsmittelindustrie.

9. Mischvorrichtung (5) zur Durchführung eines Verfahrens nach einem der Ansprüche 1 bis 7, die einen horizontalen hohlzylindrischen Körper (10) aufweist, in dessen Innenraum eine Rotorwelle (15) angeordnet ist, die mit radial ausgerichteten, durch die Rotorwelle (15) angetriebenen Rotorblätter (20) versehen ist, und die Mischvorrichtung (5) an einem Ende eine Zuführöffnung (30,31,32,33) und am anderen Ende einen Auslass (40) aufweist-, **dadurch gekennzeichnet, dass** die Rotorwelle (15) Düsen (45) aufweist, die derart ausgestaltet sind, um eine flüssige Komponente in den Innenraum des hohlzylindrischen Körpers (10) zu sprühen.

10. Mischvorrichtung nach Anspruch 9, **dadurch gekennzeichnet, dass** in einem ersten Bereich an der Rotorwelle eine Schnecke (50) angebracht ist und dieser Bereich eine erste Heizzone aufweist, die unabhängig von gegebenenfalls weiteren Heizzonen steuerbar ist.

11. Verwendung einer Mischvorrichtung nach Anspruch 9 oder 10, **dadurch gekennzeichnet, dass** am Auslass eine vertikale oder horizontale Doppelschnecke (70,75) zu Austragen der Komponenten oder der Reaktionsprodukte angebracht ist.

## Claims

1. Method for the mixing of solid and liquid components in a mixing device (5) having a horizontal hollow-cylindrical body (10), in the interior of which is arranged a rotor shaft (15), of which the radially oriented rotor blades (20) driven by the rotor shaft (15) repeatedly distribute the components to be mixed on the inner wall of the hollow-cylindrical body (10) in a thin layer, the components being intermixed as a result of the cooperation of the rotor blades (20) with the inner wall of the hollow-cylindrical body, and a liquid component being supplied through the rotor shaft (15) and being sprayed into the interior of the hollow-cylindrical body (10).

2. Method according to Claim 1, **characterized in that** the mixing device (5) has a single supply port (31) on the lateral area.

3. Method according to Claim 1, **characterized in that** the mixing device (5) has a plurality of separate supply ports (31, 32, 33) on the lateral area.

4. Method according to either one of Claims 1 and 2, **characterized in that** one or more solid components are melted in the hollow-cylindrical body (10)

5. Method according to one of the preceding claims, **characterized in that** one solid component is a thermoplastic which, after being supplied to a first region of the hollow-cylindrical body (10) which has a first heating zone (12), is, while being kneaded, heated, homogenized, plasticized and subsequently supplied to a second region.

6. Method according to one of the preceding claims,
**characterized in that**, during the mixing of the components, these react with one another.

7. Method according to Claim 6, **characterized in that** the mixture containing the reaction product is washed, dried and/or cooled in the interior of the hollow-cylindrical body.

8. Use of the method according to one of the preceding claims in the foodstuff industry.

9. Mixing device (5) for carrying out a method according to one of Claims 1 to 7, which has a horizontal hollow-cylindrical body (10), in the interior of which is arranged a rotor shaft (15) which is provided with radially oriented rotor blades (20) driven by the rotor shaft (15), the mixing device (5) having at one end a supply port (30, 31, 32, 33) and at the other end an outlet (40), **characterized in that** the rotor shaft (15) has nozzles (45) which are configured in such a way as to spray a liquid component into the interior of the hollow-cylindrical body (10).

10. Mixing device according to Claim 9, **characterized in that** a worm (50) is attached to the rotor shaft (15) in a first region, and this region has a first heating zone which can be controlled independently of any further heating zones.

11. Use of a mixing device according to Claim 9 or 10, **characterized in that** a vertical or horizontal double worm (70, 75) for discharging the components or the reaction products is attached to the outlet.

## Revendications

1. Procédé pour mélanger des matériaux solides et liquides dans un dispositif mélangeur (5), comprenant un corps cylindrique creux horizontal (10), dans l'espace interne duquel est disposé un arbre de rotor (15), dont les pales de rotor (20) orientées radialement et entraînées par l'arbre de rotor (15) répartissent les composants à mélanger de manière répétée sur la paroi interne du corps cylindrique creux (10) en couche mince, les composants étant mélangés par coopération des pales du rotor (20) avec la paroi interne du corps cylindrique creux, et un composant liquide étant alimenté par l'arbre de rotor (15) et étant pulvérisé dans l'espace interne du corps cylindrique creux (10).

2. Procédé selon la revendication 1, **caractérisé en ce que** le dispositif mélangeur (5) présente sur la surface d'enveloppe une ouverture d'alimentation unique (31).

3. Procédé selon la revendication 1, **caractérisé en ce que** le dispositif mélangeur (5) présente sur la surface d'enveloppe plusieurs ouvertures d'alimentation séparées (31, 32, 33).

4. Procédé selon l'une quelconque des revendications 1 ou 2, **caractérisé en ce qu'**un ou plusieurs composants solides sont fondus dans le corps cylindrique creux (10).

5. Procédé selon l'une quelconque des revendications précédentes, **caractérisé en ce qu'**un composant solide est un thermoplaste qui, après son alimentation dans une première région du corps cylindrique creux (10) qui présente une première zone de chauffage (12), est chauffé avec malaxage, homogénéisé, plastifié et ensuite alimenté dans une deuxième région.

6. Procédé selon l'une quelconque des revendications précédentes, **caractérisé en ce que** les composants réagissent ensemble pendant leur mélange.

7. Procédé selon la revendication 6, **caractérisé en ce que** le mélange contenant le produit réactionnel est lavé, séché et/ou refroidi dans l'espace interne du corps cylindrique creux.

8. Application du procédé selon l'une quelconque des revendications précédentes dans l'industrie alimentaire.

9. Dispositif mélangeur (5) pour mettre en oeuvre un procédé selon l'une quelconque des revendications 1 à 7, qui présente un corps cylindrique creux horizontal (10), dans l'espace interne duquel est disposé un arbre de rotor (15) qui est pourvu de pales de rotor (20) orientées radialement et entraînées par l'arbre de rotor (15), et le dispositif mélangeur (5) présentant à une extrémité une ouverture d'alimentation (30, 31, 32, 33) et à l'autre extrémité une sortie (40), **caractérisé en ce que** l'arbre de rotor (15) présente des buses (45) qui sont configurées de manière à pulvériser un composant liquide dans l'espace interne du corps cylindrique creux (10).

10. Dispositif mélangeur selon la revendication 9, **caractérisé en ce qu'**une vis sans fin (50) est montée dans une première région sur l'arbre de rotor (15) et cette région présente une première zone de chauffage qui peut être commandée indépendamment d'autres zones de chauffage éventuelles.

11. Utilisation d'un dispositif mélangeur selon la revendication 9 ou 10, **caractérisée en ce qu'**une double vis sans fin verticale ou horizontale (70, 75) est montée de manière à décharger les composants ou les produits réactionnels.
